# EUROPÄISCHE PATENTSCHRIFT

(11) **EP 0 558 507 B1**
(45) Veröffentlichungstag und Bekanntmachung des Hinweises auf die Patenterteilung: **17.05.1995**
(21) Anmeldenummer: 91918228.7
(22) Anmeldetag: 26.10.1991
(51) Int. Cl.: B60T 8/48, B60T 8/42

(54) **HYDRAULISCHE BREMSANLAGE MIT BLOCKIERSCHUTZREGELUNG**
HYDRAULIC BRAKE SYSTEM WITH ANTI-BLOCKING CONTROL
SYSTEME HYDRAULIQUE DE FREINAGE A DISPOSITIF ANTI-BLOCAGE AUTOMATIQUE

(30) Priorität: 22.11.1990 DE 4037168
(43) Veröffentlichungstag der Anmeldung: 08.09.1993
(73) Patentinhaber: ITT Automotive Europe GmbH, 60488 Frankfurt (DE)
(72) Erfinder: REINARTZ, Hans-Dieter, D-6000 Frankfurt/Main 50 (DE); STEFFES, Helmut, D-6234 Hattersheim 3 (DE)
(86) Internationale Anmeldenummer: EP9102030
(87) Internationale Veröffentlichungsnummer: WO9209464

(56) Entgegenhaltungen:
- DE-A- 3 505 410
- DE-A- 3 813 145
- DE-A- 3 831 426
- US-A- 4 618 189
- US-A- 4 703 979
- PATENT ABSTRACTS OF JAPAN vol. 13, no. 465 (M-882)(3813) 20. Oktober 1989 & JP,A,01 182 153 ( ATSUGI MOTOR PARTS CO. ) 20. Juli 1989 siehe Zusammenfassung

## Beschreibung

Die Erfindung bezieht sich auf eine hydraulische Bremsanlage mit Blockierschutzregelung, insbesondere für Kraftfahrzeuge nach dem Oberbegriff des Anspruchs 1.

Eine derartige Bremsanlage ist bereits in DE-A-40 15 882 (veröffentlicht 21.11.91) beschrieben. Hierbei handelt es sich um eine sogenannte geschlossene ABS-Anlage, die im Gegensatz zu dem bekannten offenen ABS-System keinen direkten Anschluß des Hilfsdruck- und Rücklaufsystems am hauptzylinderseitig angebrachten drucklosen Nachlaufbehälter aufweist. Das Hilfsdrucksystem entnimmt wahrend der Bremsschlupfregelung dem an der Rücklaufleitung zur Pumpe angeordneten Niederdruckspeicher das erforderliche Druckmittelvolumen und fördert dieses in die Hauptdruckleitung. Gleichzeitig wird überschüssiges Druckmittel einem im Abzweig zur Hilfsdruckleitung angeordneten Hochdruckspeicher zugeführt, dessen Druckniveau über ein nachgeschaltetes Druckbegrenzerventil eingestellt wird. In Abhängigkeit von der elektromagnetischen Ansteuerung der in der Hauptdruckleitung und der Rücklaufleitung angeordneten Einlaß- und Auslaßventile erfolgt sodann die Blockierschutzregelung in den zugehörigen Radbremsen.

Durch diesen schaltungstechnischen Aufbau gestattet es die vorgeschriebene Bremsanlage nicht mit den gegebenen Mitteln eine Regelung des Anfahr- bzw. Antriebsschlupfes durchzuführen. Die in Abhängigkeit vom Antriebsschlupf betätigte Pumpe würde zwangsläufig infolge der Bremspedallösestellung zu einer Rückförderung von Hilfsdruckmittel in den Vorratsbehälter anstatt zur Radbremse führen.

Aus der Druckschrift JP-A-1-182 153 ist eine Bremsanlage mit Blockierschutzeinrichtung bekannt geworden. Die Bremsanlage weist zum Zwecke der Funktionssicherung des Hochdruckspeichers ein in der Speicherkammer angeordnetes Überdruckventil auf. Sinkt der Druck in der Normalbremsphase unter ein bestimmtes Druckniveau im Druckspeicher, so öffnet ein weiteres in der Speicherkammer des Hochdruckspeichers integriertes Trennventil den Druckmittelzulauf vom Hauptzylinder zur Radbremse. Erfolgt die Druckabsenkung im ABS-Modus, so öffnet ein elektromagnetisches Auslaßventil die Verbindung von der Radbremse zu einem an der Pumpensaugseite angeschlossenen Niederdruckspeicher. Beim Übersteigen des u.a. durch die Pumpe beeinflußten Systemdrucks im Hochdruckspeicher schließt das Trennventil, womit eine hydraulische Rückwirkung auf das Bremspedal verhindert wird. Falls dennoch der Betriebsdruck in der Kammer des Hochdruckspeichers überschritten wird, dann öffnet das Überdruckventil und entläßt Druckmittel zum Tandemhauptzylinder. In der Bremslösestellung ist wiederum das Trennventil geöffnet, wodurch ein ungehinderter Druckausgleich zwischen der Radbremse und dem Tandemhauptzylinder ermöglicht ist.

Daher ist es die Aufgabe der Erfindung, die gattungsgemäße Bremsanlage derart weiter zu entwickeln, daß unter weitgehender Wahrung des schaltungstechnischen, insbesondere steuerungstechnischen Grundaufbaues eine kostengünstige Erweiterung auf Antriebsschlupfregelung ermöglicht wird, ohne den elektrotechnischen Leistungsbereich der Bremsanlage steigern zu müssen.

Die Aufgabe wird erfindungsgemäß durch die kennzeichnenden Merkmale der Ansprüche 1, 3 und 7 gelöst, wonach durch die Anordnung eines im wesentlichen vom Hilfsdruck gesteuerten Mehrwegeventils eine Trennung des Bremsdruckgebers von der geregelten Radbremse erfolgt. Durch die hydraulische Ansteuerung ist eine Schaltungslogik vorgegeben, die in Hinsicht auf den minimal erforderlichen Elektronikanteil keiner Erweiterung bedarf.

Die Erfindung sieht gemäß den Ansprüchen 1 und 2 vor, über ein vom Druck des Bremsdruckgebers beaufschlagbares 3/2-Wegeventil in einer ersten Schaltstellung eine Druckmittelverbindung zwischen dem als 2/2-Wegeventil ausgebildeten Mehrwegeventil und der Hilfsdruckleitung herzustellen, während in einer zweiten Schaltstellung das 3/2-Wegeventil eine hydraulische Verbindung zwischen dem Mehrwegeventil und einer die Pumpensaugleitung mit der Hauptdruckleitung verbindenden Druckmittelzulaufleitung ermöglicht. Das 3/2-Wegeventil sorgt für die jeweils folgerichtige Hilfsdruckbeaufschlagung des der Pumpe nachgeschalteten Systems, wobei das Mehrwegeventil von einer Druckfeder zunächst in der Grundposition gehalten wird.

Alternativ sieht die Erfindung gemäß den Merkmalen der Ansprüche 3 bis 5 vor, das Mehrwegeventil als 4/2-Wegeventil auszubilden, das in einer ersten Schaltstellung die Hauptdruckleitung öffnet und eine die Hilfsdruckleitung mit der Saugleitung verbindende Bypassleitung schließt, wobei die Bypassleitung in Strömungsrichtung ein Drossel- und ein offen geschaltetes Sperrelement in Reiheschaltung aufweist, um eine dem Drosselelement vorgeschaltete, das Mehrwegeventil betätigende erste Steuerleitung mit hydraulischem Druck definierter Größe zu beaufschlagen. Um einerseits ein Zuströmen von Druckmittel aus der Saugleitung und damit ein unbeabsichtigtes Umschalten des 4/2-Wegeventils zu verhindern und um aber andererseits auch den für die Umschaltung des 4/2-Wegeventils erforderlichen Umschaltdruck zu realisieren, ist das Drossel- und Sperrelement in Reihe geschaltet.

Weiterhin ist gemäß Anspruch 6 vorgesehen, eine die Grundstellung des Mehrwegeventils beeinflussende zweite Steuerleitung mit dem Bremsdruckgeber zu verbinden, und des weiteren eine mit der Hilfsdruckleitung verbundende dritte Steuerleitung am Mehrwegeventil anzuordnen.

Eine alternative, vorteilhafte Ansteuerung des als 2/2-Wegeventil ausgebildeten Mehrwegeventils gemäß Anspruch 7 erhält man, wenn die zuvor beschriebene mit dem Drosselelement und dem Rückschlagventil versehene Bypassleitung an eine das Mehrwegeventil mit einem weiteren 2/2-Wegeventil verbundene Steuerleitung angeschlossen ist, wobei die Hilfsdruckversorgung des Mehrwegeventils über die vom Bremsdruckgeber gesteuerte Umschaltung des weiteren 2/2-Wegeventils unterbrochen werden kann.

Als besonders vorteilhaft erweist sich gemäß Anspruch 8 der modulare Systemaufbau der Bremsanlage, wonach das hydraulisch gesteuerte Mehrwegeventil mit seinen funktionsrelevanten Komponenten einen sogenannten ASR-Block bildet, der neben den eigentlichen ABS- und Pumpendrucksteuerblock ein eigenständiges Modul bildet.

Nachfolgend soll anhand mehrerer Ausführungsbeispiele die Funktion der auf Anfahrschlupfregelung erweiterten blockiergeschützten Bremsanlage erläutert werden.

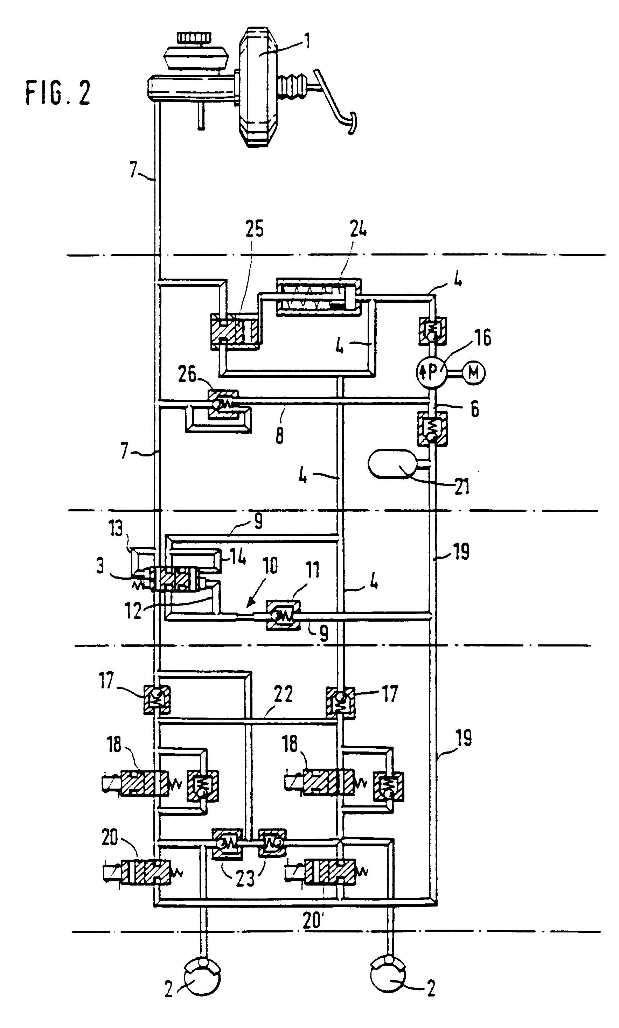

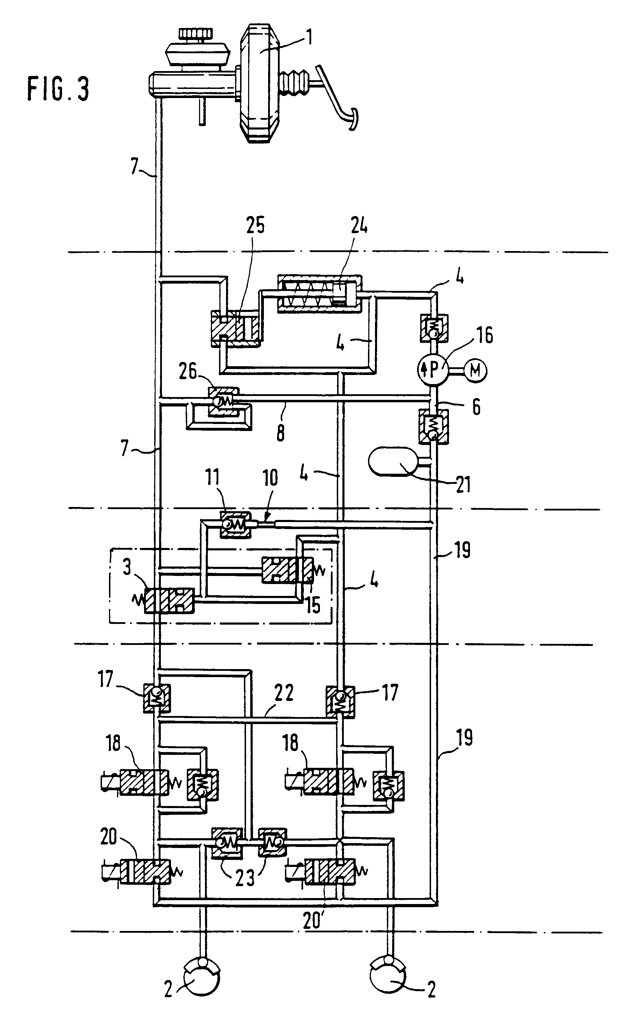

Es zeigt:
Figur 1
   ein Systemschaltbild mit aus 2/2- und 3/2-Wegeventilen bestehenden ASR-Block,
Figur 2
   eine alternative Systemschaltung mit aus 4/4-Wegeventil bestehendem ASR-Block,
Figur 3
   ein weiteres Systemschaltbild mit aus zwei 2/2-Wegeventilen bestehenden ASR-Block,
Figur 4
   eine konkrete konstruktive Ausführungsform zur Gestaltung des 4/4-Wegeventils gemäß Figur 2,
Figur 5
   eine weitere Ventilkonstruktion zur Ausführung der 2/2-Wegeventile gemäß Figur 3.

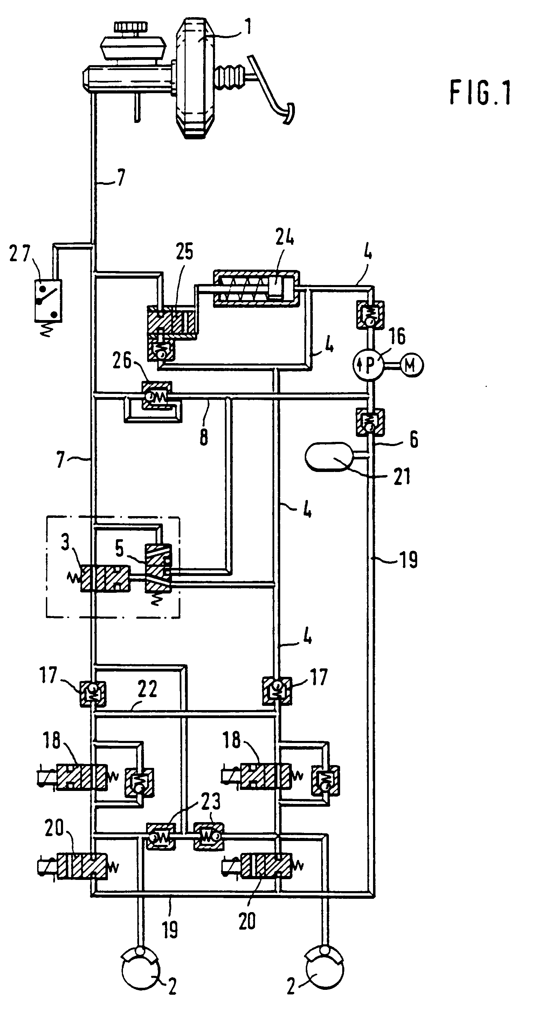

Nachfolgend wird zunächst der prinzipielle für die Figuren 1 bis 3 identische Schaltungsaufbau der Bremsanlage für einen Bremskreis beschrieben.

Die Bremsanlage weist zunächst eine an einen Bremsdruckgeber 1 angeschlossene Hauptdruckleitung 7 auf, die in Reiheschaltung das erfindungsgemäße vom Pumpendruck gesteuerte Mehrwegeventil 3, eine in Richtung des Bremsdruckgebers 1 sperrendes Rückschlagventil 17 und ein der Radbremse 2 zugeordnetes elektromagnetisches Einlaßventil 18 aufnimmt. In der an den Radbremsen 2 angeschlossenen Rücklaufleitung 19 sind die elektromagnetischen Auslaßventile 20 angeordnet, sowie ein nachgeschalteter Niederdruckspeicher 21, der die Pumpe 16 mit Druckmittel versorgt. An der Pumpe 16 schließt sich die Hilfsdruckleitung 4 an, die eine in Richtung der Pumpe 16 sperrendes Rückschlagventil 17 aufnimmt, das wiederum die den beiden Radbremsen 2 zugehörigen Einlaßventile 18 mit Druckmittel versorgt. Ein an der Hilfsdruckleitung 4 zwischen dem Rückschlagventil 17 und dem Einlaßventil 18 angeordneter Verbindungskanal 22 stellt dabei die Druckversorgung des zweiten Einlaßventils 18 sicher. Des weiteren zweigt an den Radbremsen 2 jeweils eine mit in Richtung des Bremsdruckgebers 1 öffnenden Rückschlagventilen 23 versehene hydraulische Verbindung ab, die in Nähe des Mehrwegentils 3 an der Hauptdruckleitung 7 einmündet. Ferner stellt ein an der Hilfsdruckleitung 4 in Nähe der Pumpe 16 angeordneter erster Abzweig eine Verbindung zu einem Hilfsdruckspeicher 24 her. Ein zweiter, an der Hilfsdruckleitung 4 vorgesehener Abzweig steht mittels eines vom Hilfsdruckspeicher 24 weggesteuerten Überdruckventils 25 mit der Hauptdruckleitung 7 in Verbindung. Zusätzlich verbindet ein vom Bremsdruckgeber 1 gesteuertes, in Richtung der Pumpensaugseite öffnendes Rückschlagventil 26 die Hauptdruckleitung 7 mit der Pumpe 16.

In der vorgeschlagenen Ausführungsform gemäß Figur 1 ist an der Pumpensaugseite sowie an der Hilfsdruckleitung 4 eine von der Schaltstellung eines 3/2-Wegeventils 5 abhängige hydraulische Ansteuerung des als 2/2-Wegeventils ausgeführten Mehrwegeventils 3 sichergestellt. Abbildung 1 zeigt die Bremslösestellung, in der beide Wegeventile in ihrer Grundstellung verharren.

### Funktionsweise

Bei schlupffreier Bremsbetätigung wird das 3/2-Wegeventil 5 vom Druck des Bremsdruckgebers 1 hydraulisch umgeschaltet, so daß das 3/2-Wegeventil 5 die Verbindung zwischen dem Hilfsdruck und dem Mehrwegeventil 3 unterbricht, wodurch das Mehrwegeventil 3 an die Pumpensaugseite angeschlossen ist. Folglich verharrt mangels hydraulischem Umschaltdruck das als ASR-Trennventil wirkende Mehrwegeventil 3 in der Offenstellung.

Bei Bremsschlupfregelung ist zwar die Pumpe 16 in Betrieb, jedoch kann der über die Hilfsdruckleitung 4 am 3/2-Wegeventil 5 anstehende Druck nicht zum Mehrwegeventil 3 gelangen, da das 3/2-Wegeventil 5 beaufschlagt vom Druck des Bremsdruckgebers 1 in Sperrstellung verharrt.

Zur Anfahrschlupfregelung betätigt der Hilfsdruck der Pumpe 16 das Mehrwegeventil 3 ungehindert, da infolge des inaktiven Bremsdruckgebers 1 das 3/2-Wegeventil 5 in seiner die Hilfsdruckleitung 4 mit dem ASR-Trennventil verbindenden Grundstellung verharrt. Folglich gelangt das pumpenseitige Fördervolumen zu den jeweiligen antriebsschlupfgeregelten Radbremsen 2, während der Bremsdruckgeber 1 vom Regelkreis entkoppelt ist. Ferner werden die Radbremsen der nicht angetriebenen Fahrzeugräder über die zugehörigen Einlaßventile elektromagnetisch gesperrt. Durch Betätigen des Bremsdruckgebers 1 wird die Antriebsschlupfregelung und damit die Sperrstellung des Mehrwegeventils 3, die Pumpenförderung, sowie die Antriebsschlupfregelstellung der Einlaß- und Auslaßventile 18,20 außer Betrieb gesetzt. Dazu sensiert der an der Hauptdruckleitung 7 angebrachte Druckschalter 27 zunächst den Normalbremsmodus, um über eine elektrische Signalverarbeitung in einer nicht näher dargestellten Steuerelektronik die Pumpe 16 und die Einlaß- und Auslaßventile 18,20 außer Betrieb zu setzen.

Die Figur 2 zeigt eine weitere Schaltungsvariante zur Steuerung des Druckmittelverlaufs in Abhängigkeit des jeweiligen Bremseneingriffverfahrens.

Im Normalbremsmodus befindet sich das als 4/2-Wegeventil ausgeführte Mehrwegeventil 3 in der abbildungsgemäßen Schaltstellung, wonach einerseits die Verbindung zwischen dem Bremsdruckgeber 1 und der Radbremse 2 geöffnet ist, andererseits die die Druckseite mit der Saugseite 16 verbindende Bypassleitung 9 getrennt wird.

Beim Einsetzen der Bremsschlupfregelung steht sodann der Hilfsdruck der Pumpe 16 bis zur Sperrstelle des Mehrwegeventils 3 in der Bypassleitung 9 an, während unter Einwirkung der hydraulischen sowie mechanischen auf das 4/2-Wegeventil ausgeübten Druckkräfte dieses in der die Hauptdruckleitung 7 freigebenden Grundposition verharrt. Die Bremsschlupfregelung folgt sodann auf bekannte Weise durch das elektromagnetische Ansteuern der Einlaß- und Auslaßventile 18,20, um die Druckaufbau- , Druckhalte- ,und Druckabbauphasen in den Radbremsen 2 zu realisieren. über die parallel zur Hauptdruckleitung 7 angeordneten Rückschlagventile 23 können jederzeit die in Richtung des Bremsdruckgebers 1 sperrend wirkenden Rückschlagventile 17 umgangen werden, um manuell Bremsdruck abbauen zu können. Die Rückschlagventile 17 verhindern einerseits ein unbeabsichtigtes Rückströmen des von der Pumpe zu den Radbremsen 2 geförderten Druckmittels, andererseits ermöglichen die dem Einlaßventil 18 vorgeschalteten beiden Rückschlagventile 17 ein ungehindertes manuelles Nachfördern von Druckmittel aus dem Bremsdruckgeber 1.

Zum Zwecke der Anfahrschlupfregelung genügt der von der Pumpe 16 kommende und in der Bypassleitung 9 anstehende Druck, um das Mehrwegeventil 3 in seine die Hauptdruckleitung 7 sperrende Stellung zu bewegen. Die der Pumpe 16 jeweils nachgeschalteten anfahrschlupfgeregelten Radbremsen 2 werden somit in Abhängigkeit von der Schaltstellung der zugehörigen Einlaß- und Auslaßventile 18,20 beaufschlagt. Wird die Antriebsschlupfregelung durch die Betätigung des Bremsdruckgebers 1 unterbrochen, so schaltet der Druck des Bremsdruckgebers 1 das Mehrwegeventil 3 wieder in eine stabile offene Grundstellung zurück, wobei über das Drossel- und Sperrelement 18,11 der dem Bremsdruckgeberdruck ventilseitig entgegenwirkende Umsteuerdruck in der Bypassleitung 9 abgebaut wird. Diese Ausführungsform des Mehrwegeventils 3 hat den Vorteil einer vollhydraulischen Steuerung des ASR-Trennventils, so daß auf die Anordnung eines speziellen Druckschalters zur Sensierung des Normalbremsmodus verzichtet werden kann. Des weiteren bietet es sich an, die ASR-Teile modular zwischen dem Pumpen- und ABS-Block zu integrieren, so daß in einer bevorzugten Ausführungsform eine ASR-Zwischenplatte den Pumpenteil mit dem ABS-Ventilblock verbindet. Damit läßt sich das gleiche Ventilblockgehäuse sowohl für ABS- wie auch ABS-/ASR- Bremsanlagen verwenden, ohne spezielle bauliche Abstimmungen zum Zwecke der Funktionserweiterung eingehen zu müssen.

Figur 3 zeigt eine weitere prinzipielle ASR- Ventilschaltungsanordnung in Form zweier separat zueinander angeordneter, unabhängig voneinander schaltbaren, jedoch hydraulisch miteinander verbundenen 2/2-Wegeventilen 3,15. Das als 2/2-Wegeventil ausgeführte Mehrwegeventil 3 befindet sich federkraftunterstützt in der die Verbindung zwischen dem Bremsdruckgeber 1 und den Radbremsen 2 freigebenden Grundstellung. Erst durch die Druckbeaufschlagung des in der Grundstellung die Pumpe 16 mit dem Mehrwegeventil 3 verbindenden zweiten 2/2-Wegeventils 15, schaltet das Mehrwegeventil 3 in die die Hauptdruckleitung 7 versperrende Schaltstellung, so daß der Bremsdruckgeber 1 von den Radbremse 2 und damit von der ASR-Regelung entkoppelt ist. Sobald durch das manuelle Betätigen des Bremsdruckgebers 1 ein fußkraftproportionaler Druck in der Hauptdruckleitung aufgebaut wird, kann das zweite 2/2-Wegeventil 15 hydraulisch in die den Pumpendruck von dem Mehrwegeventil 3 absperrende Schaltstellung gebracht werden. Überschüssiges zwischen den beiden 2/2-Wegeventilen 3,15 eingeschlossenes Steuerdruckvolumen gelangt über einen ein Sperrelement 11 und Drosselelement 10 aufweisenden Leitungsabzweig zur Saugseite der Pumpe 16. Das Sperrelement 11 ist als in Richtung des Mehrwegeventils 3 schließend wirkendes Rückschlagventil ausgeführt, um ein unbeabsichtigtes Schließen des Mehrwegeventils 3 auf Grund saugseitig abgelassenem Radbremsvolumen zu verhindern. Figur 3 stellt eine Alternative zur Ventilsteuerung gemäß Figur 2 dar, mit dem Vorteil, daß keine direkte Abhängigkeit zwischen den einzelnen Ventilschaltfunktionen besteht.

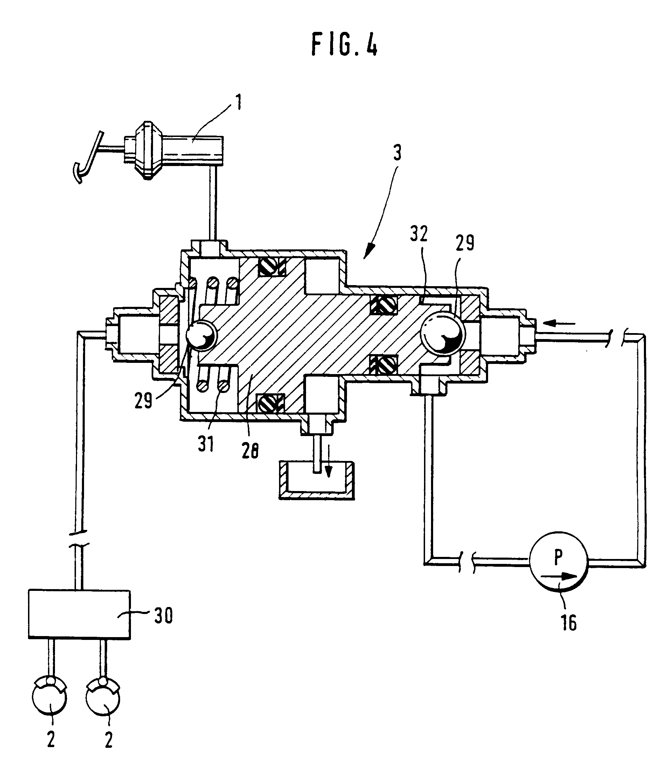

Figur 4 zeigt eine vorteilhafte bauliche Ausführungsform des in Figur 2 dargestellten Mehrwegeventils 3. Das als 4/2-Wegeventil ausgebildete Mehrwegeventil 3 weist einen Stufenkolben 28 auf, der zu beiden Seiten an jeweils einem Schaft ein Kugelsitzventil 29 aufnimmt, die entweder die Druckmittelverbindung zwischen dem Bremsdruckgeber 1 und dem radbremsseitigen ABS-Ventilblock 3 oder die Druckmittelverbindung zwischen der Pumpe 16 und der Pumpensaugseite steuern. Eine zwischen der Gehäusewand und der Stirnfläche des Stufenkolbens 28 eingespannte Druckfeder 31 bestimmt die offene Grundstellung des ASR- Trennventils.

Bei schlupffreier Normalbremsung steht der Druck des Bremsdruckgebers 1 an der großen federkraftbeaufschlagten Stirnfläche des Stufenkolbens 28 an. Durch die Druckfeder 31 verharrt das Ventil zunächst geöffnet. Durch diese Grundstellung erfolgt keine Aufnahme von zusätzlichem Druckmittelvolumen. Wird die Pumpe 16 zum Zwecke der ABS-Regelung aktiviert, so verbleibt der Stufenkolben 28 in der gezeigten offenen Grundstellung. Das gewählte Flächenverhältnis der großen, federkraftbeaufschlagten sowie zusätzlich fußkraftproportional beaufschlagten Stirnfläche zur pumpenseitig beaufschlagten kleineren Ventilsitzstirnfläche am Stufenkolben 28 stabilisiert die Grundstellung des Stufenkolbens 28.

Im ASR-Modus hingegen wirkt der relativ hohe Pumpendruck auf die aus dem Kugelsitzventil 29 gebildete kleinere Stirnfläche des Stufenkolbens 28. Sobald diese kleinere Stirnfläche den Rücklauf zur Saugseite der Pumpe 16 geringfügig freigibt, kommt eine als kleinere Kolbenstufe 32 ausgebildete Ringfläche zur Geltung. Dies ermöglicht auf relativ einfache Weise eine Flipflop- Schaltung des Ventils. Der Stufenkolben 28 kann folglich mit relativ geringem Druck die geöffnete Stellung zur Saugseite der Pumpe 16 einhalten, während das unter Federwirkung stehende, im Bereich der größeren Kolbenstufe angeordnete Kugelsitzventil 29 die Verbindung des Bremsdruckgebers 1 zum an der Radbremse angeschlossenen ABS-Ventilblock unterbricht. Der Druck zur Regelung des Antriebsschlupfes kann ungehindert aufgebaut werden. Wird die aus der Differenzfläche der großen zur kleinen Kolbenstufe 32 gebildete wirksame Stirnringfläche vom Druck des Bremsdruckgebers 1 beaufschlagt, so schließt das den Pumpenanschluß zugewandte Kugelsitzventil 29, während das der Druckfeder 31 zugewandte Kugelsitzventil 29 den Durchlaß in Richtung der Radbremsen freigibt. Sobald das die Bypassleitung zwischen Pumpendruck und Pumpensaugseite steuernde Kugelsitzventil 29 schließt, bewirkt das in der Abbildung 2 dargestellte Drossel- und Sperrelement die Druckentlastung der kleineren Kolbenstufe. Damit stabilisiert sich infolge der nun unwirksamen kleineren Kolbenstufe 32 die Schaltstellung des Stufenkolbens 28 in Abhängigkeit des übrigen im Bereich der beiden Kugelsitzventile 29 beaufschlagten Stirnflächen. Damit ist erreicht, daß bei einem etwaigen noch wirksamen Pumpendruck auch bei relativ geringen vom Bremsdruckgeber 1 eingesteuerten Druck die Druckmittelverbindung in Richtung der Radbremsen geöffnet bleibt.

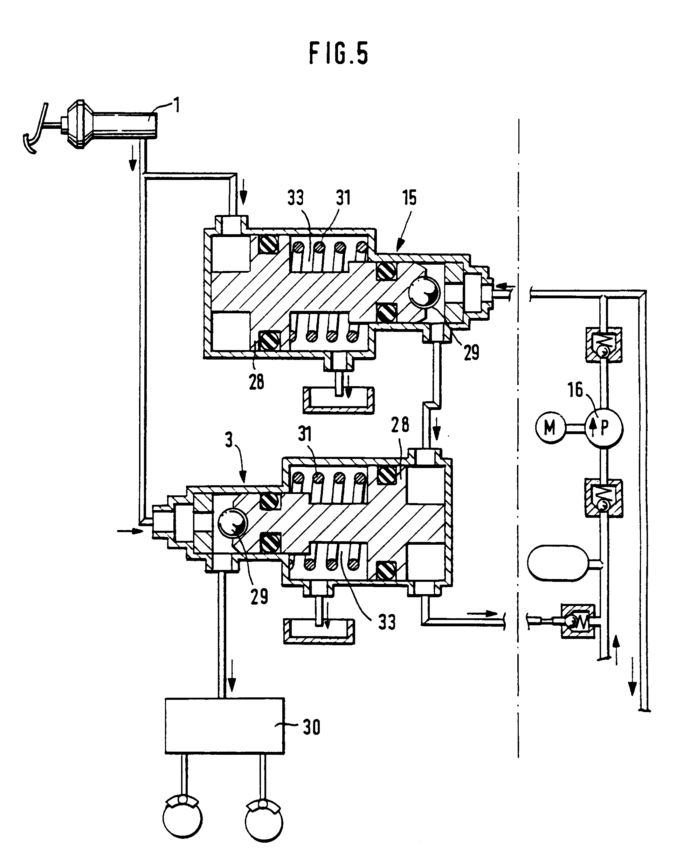

In Anlehnung an die konstruktive Ausführung gemäß Figur 4 beschreibt Figur 5 die bauliche Ausführungsform gemäß der hydraulischen Schaltung nach Figur 3. Beide 2/2-Wegeventile 3,15 sind mit Stufenkolben 28 versehen, die analog zur Ausführung der Figur 4 jeweils an ihrem Fortsatz ein Kugelsitzventil 29 aufweisen. Dieses stellt im ersten Wegeventil 15 die Druckmittelverbindung zwischen der Druckseite und der Saugseite der Pumpe 16 her, während das Kugelsitzventil 29 des zweiten 2/2-Wegeventils 3 die Druckmittelverbindung zwischen dem Bremsdruckgeber 1 und den den Ventilblock 30 nachgeschalteten Radbremsen herstellt. Die Druckfedern 31 sind im Gegensatz zur Darstellung nach Figur 4 im drucklosen Leckageringraum 33 eines jeden Wegventils 3,15 eingespannt und halten beide Wegeventile zunächst in ihrer geöffneten Grundstellung. Hinsichtlich der Funktionsweise wird auf den Beschreibungsteil zur Figur 3 verwiesen.

### Bezugszeichenliste

- 1: Bremsdruckgeber
- 2: Radbremse
- 3: Mehrwegeventil
- 4: Hilfsdruckleitung
- 5: 3/2-Wegeventil
- 6: Saugleitung
- 7: Hauptdruckleitung
- 8: Druckmittelzulaufleitung
- 9: Bypassleitung
- 10: Drosselelement
- 11: Sperrelement
- 12: erste Steuerleitung
- 1: 3 zweite Steuerleitung
- 14: dritte Steuerleitung
- 15: zweites 2/2-Wegeventil
- 16: Pumpe
- 17: Rückschlagventil
- 18: Einlaßventil
- 19: Rücklaufleitung
- 20: Auslaßventil
- 21: Niederdruckspeicher
- 22: Verbindungskanal
- 23: Rückschlagventil
- 24: Hochdruckspeicher
- 25: Überdruckventil
- 26: Rückschlagventil
- 27: Druckschalter
- 28: Stufenkolben
- 29: Kugelsitzventil
- 30: ABS-Ventilblock
- 31: Druckfeder
- 32: kleine Kolbenstufe
- 33: Leckageringraum

## Patentansprüche

1. Hydraulische Bremsanlage mit Blockierschutzregelung, insbesondere für Kraftfahrzeuge, mit einem Bremsdruckgeber (1), einem Niederdruckspeicher (21), mindestens eine Radbremse (2) aufweisend, die über eine Hauptdruckleitung (7) mit dem Bremsdruckgeber (1) und über eine Rücklaufleitung (19) mit dem Niederdruckspeicher (21) in Verbindung steht, mit einem elektromagnetisch betätigten Auslaßventil (20), das in die Rücklaufleitung (19) eingefügt ist, wobei dieses in seiner Ruhestellung die Rücklaufleitung (19) sperrt und in seiner Schaltstellung die Rücklaufleitung (19) freigibt, und mit einem in die Hauptdruckleitung (7) eingefügten elektromagnetisch gesteuerten Einlaßventil (18), mit einer Pumpe (16), die aus dem Niederdruckspeicher (21) Druckmittel ansaugt, das über eine Hilfsdruckleitung (4) mindestens zu einer Radbremse (2) förderbar ist, mit einem Sensor zum Erfassen der Winkelgeschwindigkeit des abzubremsenden Rades, sowie einer elektronischen Auswerteeinheit, die das Sensorsignal auswertet und Schaltsignale für den Pumpenantrieb und das Einlaß- und Auslaßventil (18, 20) erzeugt, und mit einem an der Hilfsdruckleitung (4) angeschlossenen Überdruckventil (25), das in Abhängigkeit von einem definierten Druck innerhalb eines an der Hilfsdruckleitung (4) angeschlossenen Hochdruckspeichers (24) von einer Sperrstellung in eine Offenstellung umsteuerbar ist, wodurch Hilfsdruckmittel zum Bremsdruckgeber (1) förderbar ist, wobei ein in der Grundposition auf Durchlaß geschaltetes, den Bremsdruckgeber (1) mit der nachgeschalteten Radbremse (2) druckmittelverbindendes Mehrwegeventil (3) in Abhängigkeit des in der Hilfsdruckleitung (4) anstehenden Pumpendrucks die Druckmittelverbindung zwischen dem Bremsdruckgeber (1) und der angeschlossenen Radbremse (2) zu sperren vermag, dadurch **gekennzeichnet**, daß über ein vom Druck des Bremsdruckgebers (1) beaufschlagbares 3/2-Wegeventil (5) in einer ersten Schaltstellung eine Druckmittelverbindung zwischen dem als 2/2-Wegeventil ausgebildeten Mehrwegeventil (3) und der Hilfsdruckleitung (4) herstellbar ist, während in einer zweiten Schaltstellung das 3/2-Wegeventil (5) eine hydraulische Verbindung zwischen dem Mehrwegeventil (3) und einer die Pumpensaugleitung (6) mit der Hauptdruckleitung (7) verbindenden Druckmittelzulaufleitung (8) aufweist (Figur 1).

2. Hydraulische Bremsanlage mit Blockierschutzregelung nach Anspruch 1, dadurch **gekennzeichnet**, daß das Mehrwegeventil (3) sowie das 3/2-Wegeventil (5) jeweils von einer Druckfeder (31) in der Grundposition gehalten ist (Figur 1).

3. Hydraulische Bremsanlage mit Blockierschutzregelung, insbesondere für Kraftfahrzeuge, mit einem Bremsdruckgeber (1), einem Niederdruckspeicher (21), mindestens eine Radbremse (2) aufweisend, die über eine Hauptdruckleitung (7) mit dem Bremsdruckgeber (1) und über eine Rücklaufleitung (19) mit dem Niederdruckspeicher (21) in Verbindung steht, mit einem elektromagnetisch betätigten Auslaßventil (20), das in die Rücklaufleitung (19) eingefügt ist, wobei dieses in seiner Ruhestellung die Rücklaufleitung (19) sperrt und in seiner Schaltstellung die Rücklaufleitung (19) freigibt, und mit einem in die Hauptdruckleitung (7) eingefügten elektromagnetisch gesteuerten Einlaßventil (18), mit einer Pumpe (16), die aus dem Niederdruckspeicher (21) Druckmittel ansaugt, das über eine Hilfsdruckleitung (4) mindestens zu einer Radbremse (2) förderbar ist, mit einem Sensor zum Erfassen der Winkelgeschwindigkeit des abzubremsenden Rades, sowie einer elektronischen Auswerteeinheit, die das Sensorsignal auswertet und Schaltsignale für den Pumpenantrieb und das Einlaß- und Auslaßventil (18, 20) erzeugt, und mit einem an der Hilfsdruckleitung (4) angeschlossenen Überdruckventil (25), das in Abhängigkeit von einem definierten Druck innerhalb eines an der Hilfsdruckleitung (4) angeschlossenen Hochdruckspeichers (24) von einer Sperrstellung in eine Offenstellung umsteuerbar ist, wodurch Hilfsdruckmittel zum Bremsdruckgeber (1) förderbar ist, wobei ein in der Grundposition auf Durchlaß geschaltetes, den Bremsdruck-geber (1) mit der nachgeschalteten Radbremse (2) druckmittelverbindendes Mehrwegeventil (3) in Abhängigkeit des in der Hilfsdruckleitung (4) anstehenden Pumpendrucks die Druckmittelverbindung zwischen dem Bremsdruckgeber (1) und der angeschlossenen Radbremse (2) zu sperren vermag, dadurch **gekennzeichnet**, daß daß das Mehrwegeventil (3) aus einem 4/2-Wegeventil gebildet ist, das in einer ersten Schaltstellung die Hauptdruckleitung (7) geöffnet und eine die Hilfsdruckleitung (4) mit der Rücklaufleitung (19) verbundene Bypassleitung (9) geschlossen hält (Figur 2).

4. Hydraulische Bremsanlage mit Blockierschutzregelung nach Anspruch 3, dadurch **gekennzeichnet**, daß das aus einem 4/2-Wegeventil gebildete Mehrwegeventil (3) in einer zweiten Schaltstellung die Hauptdruckleitung (7) unterbrochen und die Bypassleitung (9) geöffnet hält.

5. Hydraulische Bremsanlage mit Blockierschutzregelung nach Anspruch 3 oder 4, dadurch **gekennzeichnet**, daß die Bypassleitung (9) in Strömungsrichtung ein Drossel- und ein offen schaltbares Sperrelement (10,11) in Reiheschaltung aufweist, um eine dem Drosselelement (10) vorgeschaltete, das Mehrwegeventil (3) betätigende erste Steuerleitung (12) mit hydraulischem Druck definierter Größe zu beaufschlagen (Figur 2).

6. Hydraulische Bremsanlage mit Blockierschutzregelung nach mindestens einem der vorhergehenden Ansprüche 2 bis 5, dadurch **gekennzeichnet**, daß eine die Grundstellung des Mehrwegeventils (3) beeinflussende zweite Steuerleitung (13) eine hydraulische Verbindung zum Bremsdruckgeber (1) aufweist, sowie das eine mit der Hilfsdruckleitung (4) verbundene dritte Steuerleitung (14) am Mehrwegeventil (3) vorgesehen ist (Figur 2).

7. Hydraulische Bremsanlage mit Blockierschutzregelung, insbesondere für Kraftfahrzeuge, mit einem Bremsdruckgeber (1), einem Niederdruckspeicher (21), mindestens eine Radbremse (2) aufweisend, die über eine Hauptdruckleitung (7) mit dem Bremsdruckgeber (1) und über eine Rücklaufleitung (19) mit dem Niederdruckspeicher (21) in Verbindung steht, mit einem elektromagnetisch betätigten Auslaßventil (20), das in die Rücklaufleitung (19) eingefügt ist, wobei dieses in seiner Ruhestellung die Rücklaufleitung (19) sperrt und in seiner Schaltstellung die Rücklaufleitung (19) freigibt, und mit einem in die Hauptdruckleitung (7) eingefügten elektromagnetisch gesteuerten Einlaßventil (18), mit einer Pumpe (16), die aus dem Niederdruckspeicher (21) Druckmittel ansaugt, das über eine Hilfsdruckleitung (4) mindestens zu einer Radbremse (2) förderbar ist, mit einem Sensor zum Erfassen der Winkelgeschwindigkeit des abzubremsenden Rades, sowie einer elektronischen Auswerteeinheit, die das Sensorsignal auswertet und Schaltsignale für den Pumpenantrieb und das Einlaß- und Auslaßventil (18, 20) erzeugt, und mit einem an der Hilfsdruckleitung (4) angeschlossenen Überdruckventil (25), das in Abhängigkeit von einem definierten Druck innerhalb eines an der Hilfsdruckleitung (4) angeschlossenen Hochdruckspeichers (24) von einer Sperrstellung in eine Offenstellung umsteuerbar ist, wodurch Hilfsdruckmittel zum Bremsdruckgeber (1) förderbar ist, wobei ein in der Grundposition auf Durchlaß geschaltetes, den Bremsdruckgeber (1) mit der nachgeschalteten Radbremse (2) druckmittelverbindendes Mehrwegeventil (3) in Abhängigkeit des in der Hilfsdruckleitung (4) anstehenden Pumpendrucks die Druckmittelverbindung zwischen dem Bremsdruckgeber (1) und der angeschlossenen Radbremse (2) zu sperren vermag, dadurch **gekennzeichnet**, daß das als 2/2-Wegeventil ausgeführte Mehrwegeventil (3) mittels einem vom Bremsdruckgeber (1) hydraulisch umschaltbaren, in der Grundstellung auf Durchlaß geschalteten weiteren 2/2-Wegeventil (15) eine Druckmittelverbindung zur Pumpe (16) aufweist, an der ein Drosselelement (10) sowie ein in Richtung der Pumpe (16) öffnendes Sperrelement (11) angeschlossen sind, um die Schaltfunktion des Mehrwegeventils (3) zu bewirken (Figur 3).

8. Hydraulische Bremsanlage mit Blockierschutzregelung nach mindestens einem der vorhergehenden Ansprüche 1 bis 7, dadurch **gekennzeichnet**, daß das Mehrwegeventil (3) mit den zur Antriebsschlupfregelung erforderlichen funktionsrelevanten Komponenten einen modularen Funktionsblock bildet (Figur 1,2,3).

## Claims

1. A hydraulic brake system with anti-locking control, in particular, suitable for use with automotive vehicles, including a brake pressure generator (1), a low-pressure accumulator (21), at least one wheel brake (2) which, through a main pressure conduit (7) is in communication with the brake pressure generator (1) and, through a return conduit (19), with a low pressure accumulator (21), further including an electromagnetically actuated outlet valve (20) inserted in the return conduit (19), with the outlet valve, in its inactive position, blocking the return conduit (19) and, in its switching condition, opening the return conduit (19), and including an electromagnetically controlled inlet valve (18) inserted in the main pressure conduit (7), a pump (16) taking pressure fluid from the low pressure accumulator (21) to be delivered, through an auxiliary pressure conduit (4), at least to one wheel brake (2), a sensor for detecting the angular velocity of the wheel to be decelerated, and an electronic analyzer analyzing the sensor signal and generating switch signals for the pump drive and the inlet and outlet valves (18, 20), and including a pressure relief valve (25) in communication with the auxiliary pressure conduit (4) which valve, in response to a defined pressure within a high-pressure accumulator (24) connected to the auxiliary pressure conduit (4), is adapted to be shifted from a blocking position to an open position, thereby enabling auxiliary pressure fluid to be conveyed to the brake pressure generator (1), wherein a multi-way valve (3) switched, in the basic position, to open passage and providing a pressure fluid connection between the brake pressure generator (1) and the wheel brake (2) connected downstream thereof, is capable to block, in response to the pump pressure prevailing in the auxiliary pressure conduit (4), the pressure fluid connection between the brake pressure generator (1) and the wheel brake (2) coupled thereto,
**characterized** in that, through a 3-way/2-position valve (5), to which the pressure of the brake pressure generator (1) can be applied, in a first switching condition, a pressure fluid connection can be provided between the multi-way valve (3), configured as a 2-way/2-position directional control valve, and the auxiliary pressure conduit (4), while, in a second switching condition, the 3-way/2-position valve (5) provides a hydraulic connection between the multi-way valve (3) and a pressure fluid supply conduit (8) connecting the pump intake conduit (6) to the main pressure conduit (7) (Fig. 1).

2. A hydraulic brake system having anti-locking control as claimed in claim 1,
**characterized** in that the multi-way valve (3) and the 3-way/2-position valve (5) are respectively held in the basic position by a compression spring (31) (Fig. 1).

3. A hydraulic brake system with anti-locking control, in particular, suitable for use with automotive vehicles, including a brake pressure generator (1), a low-pressure accumulator (21), at least one wheel brake (2) which, through a main pressure conduit (7) is in communication with the brake pressure generator (1) and, through a return conduit (19), with a low pressure accumulator (21), further including an electromagnetically actuated outlet valve (20) inserted in the return conduit (19), with the outlet valve, in its inactive position, blocking the return conduit (19) and, in its switching condition, opening the return conduit (19), and including an electromagnetically controlled inlet valve (18) inserted in the main pressure conduit (7), a pump (16) taking pressure fluid from the low pressure accumulator (21) to be delivered, through an auxiliary pressure conduit (4), at least to one wheel brake (2), a sensor for detecting the angular velocity of the wheel to be decelerated, and an electronic analyzer analyzing the sensor signal and generating switch signals for the pump drive and the inlet and outlet valves (18, 20), and including a pressure relief valve (25) in communication with the auxiliary pressure conduit (4) which valve, in response to a defined pressure within a high-pressure accumulator (24) connected to the auxiliary pressure conduit (4), is adapted to be shifted from a blocking position to an open position, thereby enabling auxiliary pressure fluid to be conveyed to the brake pressure generator (1), wherein a multi-way valve (3) switched, in the basic position, to open passage and providing a pressure fluid connection between the brake pressure generator (1) and the wheel brake (2) connected downstream thereof, is capable to block, in response to the pump pressure prevailing in the auxiliary pressure conduit (4), the pressure fluid connection between the brake pressure generator (1) and the wheel brake (2) coupled thereto, **characterized** in that the multi-way valve (3) is a 4-way/2-position directional control valve which, in a first switching condition, keeps the main pressure conduit (7) opened and a by-pass conduit (9) closed which connects the auxiliary pressure conduit (4) to the return conduit (19) (Fig. 2).

4. A hydraulic brake system having anti-locking control as claimed in claim 3,
**characterized** in that the multi-way valve (3), configured as a 4-way/2-position valve, in a second switching condition, keeps the main pressure conduit (7) interrupted and the by-pass conduit (9) opened.

5. A hydraulic brake system having anti-locking control according to claim 3 or 4,
**characterized** in that the by-pass conduit (9), in the flow direction, has in series a throttle element and a blocking element (10, 11), switchable to the open position, to apply hydraulic pressure of a defined magnitude to a first control conduit (12) actuating the multi-way valve (3) and connected upstream of the throttle element (10) (Fig. 2).

6. A hydraulic brake system having anti-locking control as claimed in at least one of the preceding claims 2 to 5,
**characterized** in that a second control conduit (13) influencing the basic position of the multi-way valve (3) provides a hydraulic connection to the brake pressure generator (1), and in that a third control conduit (14) connected to the auxiliary pressure conduit (4) is provided on the multi-way valve (3) (Fig. 2).

7. A hydraulic brake system with anti-locking control, in particular, suitable for use with automotive vehicles, including a brake pressure generator (1), a low-pressure accumulator (21), at least one wheel brake (2) which, through a main pressure conduit (7) is in communication with the brake pressure generator (1) and, through a return conduit (19), with a low pressure accumulator (21), further including an electromagnetically actuated outlet valve (20) inserted in the return conduit (19), with the outlet valve, in its inactive position, blocking the return conduit (19) and, in its switching condition, opening the return conduit (19), and including an electromagnetically controlled inlet valve (18) inserted in the main pressure conduit (7), a pump (16) taking pressure fluid from the low pressure accumulator (21) to be delivered, through an auxiliary pressure conduit (4), at least to one wheel brake (2), a sensor for detecting the angular velocity of the wheel to be decelerated, and an electronic analyzer analyzing the sensor signal and generating switch signals for the pump drive and the inlet and outlet valves (18, 20), and including a pressure relief valve (25) in communication with the auxiliary pressure conduit (4) which valve, in response to a defined pressure within a high-pressure accumulator (24) connected to the auxiliary pressure conduit (4), is adapted to be shifted from a blocking position to an open position, thereby enabling auxiliary pressure fluid to be conveyed to the brake pressure generator (1), wherein a multi-way valve (3) switched, in the basic position, to open passage and providing a pressure fluid connection between the brake pressure generator (1) and the wheel brake (2) connected downstream thereof, is capable to block, in response to the pump pressure prevailing in the auxiliary pressure conduit (4), the pressure fluid connection between the brake pressure generator (1) and the wheel brake (2) coupled thereto,
**characterized** in that the multi-way valve (3) configured as a 2-way/2-position valve, through another 2-way/2-position valve (15) which is hydraulically reswitchable by the brake pressure generator (1) and, in the basic position, is switched to passage, provides a pressure fluid connection to the pump (16), to which are connected a throttle element (10) and a blocking element (11) opening in the direction of the pump (16) to perform the switching function of the multi-way valve (3) (Fig. 3).

8. A hydraulic brake system including anti-locking control as claimed in at least one of the preceding claims 1 to 7,
**characterized** in that the multi-way valve (3) with the functional components required for traction slip control forms a modular function block (Figs. 1, 2, 3).

## Revendications

1. Système hydraulique de freinage à régulation antiblocage, notamment pour véhicule automobile, comprenant un générateur de pression de freinage (1), un accumulateur basse pression (21), au moins un [rein de roue (2), qui est en communication avec le générateur de pression de freinage (1) par l'intermédiaire d'une conduite de pression principale (7) et avec l'accumulateur basse pression (21) par l'intermédiaire d'une conduite de retour (19), une valve de sortie (20) à actionnement électromagnétique, qui est interposée dans la conduite de retour (19) et qui bloque la conduite de retour (19) dans sa position de repos et rend libre la conduite de retour (19) dans sa position de commutation, une valve d'entrée (18) à commande électromagnétique, interposée dans la conduite de pression principale (7), une pompe (16), qui, à partir de l'accumulateur basse pression (21), aspire de l'agent de pression qui peut être refoulé vers au moins un [rein de roue (2) par l'intermédiaire d'une conduite de pression auxiliaire (4), un capteur, servant à détecter la vitesse angulaire de la roue à freiner, une unité électronique d'exploitation, qui exploite le signal du capteur et produit des signaux de commutation pour l'entraînement de la pompe, la valve d'entrée (18) et la valve de sortie (20), et une valve de surpression (25) qui est reliée à la conduite de pression auxiliaire (4) et qui est agencée de façon à pouvoir être commutée d'une position de blocage à une position d'ouverture en fonction d'une pression définie régnant dans un accumulateur haute pression (24) raccordé à la conduite de pression auxiliaire (4), de sorte que de l'agent de pression auxiliaire peut être envoyé au générateur de pression de freinage (1), tandis qu'une valve à plusieurs voies (3), commutée de façon à permettre le passage dans sa position de base et permettant un passage de l'agent de pression du générateur de pression de freinage (1) vers le frein de roue (2) disposé en aval, permet, en fonction de la pression de pompe régnant dans la conduite de pression auxiliaire (4), de bloquer le passage de l'agent de pression entre le générateur de pression de freinage (1) et le [rein de roue (2) raccordé, caractérisé en ce qu'au moyen d'une valve à 3 voies/2 positions (5) agencée de façon à pouvoir être soumise à l'action de la pression du générateur de pression de freinage (1) et lorsque cette valve est dans une première position de commutation, une communication peut être offerte à l'agent de pression entre la valve à plusieurs voies (3), réalisée sous la forme d'une valve à 2 voies/2 positions, et la conduite de pression auxiliaire (4), tandis que, dans une seconde position de commutation, la valve à 3 voies/2 positions (5) comporte une liaison hydraulique entre la valve à plusieurs voies (3) et une conduite d'amenée d'agent de pression (8) reliant la conduite d'aspiration de pompe (6) à la conduite de pression principale (7) (figure 1).

2. Système hydraulique de freinage à régulation antiblocage selon la revendication 1, caractérisé en ce que la valve à plusieurs voies (3) et la valve à 3 voies/2 positions (5) sont chacune maintenues dans leur position de base par un ressort de compression (figure 1).

3. Système hydraulique de freinage à régulation antiblocage, notamment pour véhicule automobile, comprenant un générateur de pression de freinage (1) un accumulateur basse pression (21), au moins un frein de roue (2), qui est en communication avec le générateur de pression de freinage (1) par l'intermédiaire d'une conduite de pression principale (7) et avec l'accumulateur basse pression (21) par l'intermédiaire d'une conduite de retour (19), une valve de sortie (20) à actionnement électromagnétique, qui est interposée dans la conduite de retour (19) et qui bloque la conduite de retour (19) dans sa position de repos et rend libre la conduite de retour (19) dans sa position de commutation, une valve d'entrée (18) à commande électromagnétique, interposée dans la conduite de pression principale (7), une pompe (16), qui, à partir de l'accumulateur basse pression (21), aspire de l'agent de pression qui peut être refoulé vers au moins un frein de roue (2) par l'intermédiaire d'une conduite de pression auxiliaire (4), un capteur, servant à détecter la vitesse angulaire de la roue à freiner, une unité électronique d'exploitation, qui exploite le signal du capteur et produit des signaux de commutation pour l'entraînement de la pompe, la valve d'entrée (18) et la valve de sortie (20), et une valve de surpression (25) qui est reliée à la conduite de pression auxiliaire (4) et qui est agencée de façon à pouvoir être commutée d'une position de blocage à une position d'ouverture en fonction d'une pression définie régnant dans un accumulateur haute pression (24) raccordé à la conduite de pression auxiliaire (4), de sorte que de l'agent de pression auxiliaire peut être envoyé au générateur de pression de freinage (1), tandis qu'une valve à plusieurs voies (3), commutée de façon à permettre le passage dans sa position de base et permettant un passage de l'agent de pression du générateur de pression de freinage (1) vers le frein de roue (2) disposé en aval, permet, en fonction de la pression de pompe régnant dans la conduite de pression auxiliaire (4), de bloquer le passage de l'agent de pression entre le générateur de pression de freinage (1) et le frein de roue (2) raccordé, caractérisé en ce que la valve à plusieurs voies (3) est formée d'une valve à 4 voies /2 positions qui, dans une première position de commutation, maintient ouverte la conduite de pression principale (7) et maintient fermée une conduite de dérivation (9) reliant la conduite de pression auxiliaire (4) à la conduite de retour (19) (figure 2).

4. Système hydraulique de freinage à régulation antiblocage selon la revendication 3, caractérisé en ce que, dans une seconde position de commutation, la valve à plusieurs voies (3), formée d'une valve à 4 voies/2 positions, maintient interrompue la conduite de pression principale (7) et maintient fermée la conduite de dérivation (9).

5. Système hydraulique de freinage à régulation antiblocage selon la revendication 3 ou 4, caractérisé en ce que la conduite de dérivation (9) comporte en série dans le sens de l'écoulement un élément d'étranglement (10) et un élément de blocage (11) agencé de façon à pouvoir être commuté en position ouverte, afin de pouvoir appliquer une pression hydraulique d'une valeur définie dans une première conduite de commande (12) disposée en amont de l'élément d'étranglement (10) et actionnant la valve à plusieurs voies (3) (figure 2).

6. Système hydraulique de freinage à régulation antiblocage selon au moins l'une des revendications précédentes 2 à 5, caractérisé en ce qu'une deuxième conduite de commande (13) agissant sur la position de base de la valve à plusieurs voies (3) offre une liaison hydraulique avec le générateur de pression de freinage (1) et en ce qu'il est prévu sur la valve à plusieurs voies (3) une troisième conduite de commande (14) reliée à la conduite de pression auxiliaire (4) (figure 2).

7. Système hydraulique de freinage à régulation antiblocage, notamment pour véhicule automobile, comprenant un générateur de pression de freinage (1) un accumulateur basse pression (21), au moins un frein de roue (2), qui est en communication avec le générateur de pression de freinage (1) par l'intermédiaire d'une conduite de pression principale (7) et avec l'accumulateur basse pression (21) par l'intermédiaire d'une conduite de retour (19), une valve de sortie (20) à actionnement électromagnétique, qui est interposée dans la conduite de retour (19) et qui bloque la conduite de retour (19) dans sa position de repos et rend libre la conduite de retour (19) dans sa position de commutation, une valve d'entrée (18) à commande électromagnétique, interposée dans la conduite de pression principale (7), une pompe (16), qui, à partir de l'accumulateur basse pression (21), aspire de l'agent de pression qui peut être refoulé vers au moins un frein de roue (2) par l'intermédiaire d'une conduite de pression auxiliaire (4), un capteur, servant à détecter la vitesse angulaire de la roue à freiner, une unité électronique d'exploitation, qui exploite le signal du capteur et produit des signaux de commutation pour l'entraînement de la pompe, la valve d'entrée (18) et la valve de sortie (20), et une valve de surpression (25) qui est reliée à la conduite de pression auxiliaire (4) et qui est agencée de façon à pouvoir être commutée d'une position de blocage à une position d'ouverture en fonction d'une pression définie régnant dans un accumulateur haute pression (24) raccordé à la conduite de pression auxiliaire (4), de sorte que de l'agent de pression auxiliaire peut être envoyé au générateur de pression de freinage (1), tandis qu'une valve à plusieurs voies (3), commutée de façon à permettre le passage dans sa position de base et permettant un passage de l'agent de pression du générateur de pression de freinage (1) vers le frein de roue (2) disposé en aval, permet, en fonction de la pression de pompe régnant dans la conduite de pression auxiliaire (4), de bloquer le passage de l'agent de pression entre le générateur de pression de freinage (1) et le frein de roue (2) raccordé, caractérisé en ce qu'au moyen d'une autre valve à 2 voies/2 positions (15) qui est agencée de façon à pouvoir être commutée par voie hydraulique par le générateur de pression de freinage (1) et qui, dans sa position de base, est commutée de façon à permettre le passage, la valve à plusieurs voies (3) réalisée sous la forme d'une valve à 2 voies/2 positions offre à l'agent de pression un passage vers la pompe (16) auquel sont raccordés un élément d'étranglement (10) et un élément de blocage (11) s'ouvrant en direction de la pompe (16), afin d'assurer la fonction de commutation de la valve à plusieurs positions (3) (figure 3).

8. Système hydraulique de freinage à régulation antiblocage selon au moins l'une des revendications précédentes 1 à 7, caractérisé en ce que, par ses éléments constitutifs importants par leur fonction qui sont nécessaires à la régulation du glissement de traction, la valve à plusieurs voies (3) forme un bloc fonctionnel modulaire (figures 1, 2, 3).
